# EUROPEAN PATENT APPLICATION

(11) **EP 1 269 849 A1**
(43) Date of publication of application: **02.01.2003**
(21) Application number: 00915095.4
(22) Date of filing: 31.03.2000
(51) Int. Cl.: A01N 63/00, A01G 13/00

(54) **A METHOD FOR PREVENTING PLANT DISEASE**

(71) Applicant: Yuen Foong Yu Paper MFG Company, Limited, Taipei, Taiwan (TW)
(72) Inventor: HSIEH, Shihpanyu, Taichung (CN); HUANG, Ruizhi, Dashi Jen, Taoyuan (CN)
(74) Representative: Behnisch, Werner, Dr.
(86) International application number: CN0000072
(87) International publication number: WO01072131

(57) **Abstract**

A plant cultivation method for preventing weed, pest and soil borne disease is disclosed. The method is characterized in that a photo-resistive and degradable covering material daubed with a bio-control microbe (a specific fungus: Gliocladium sp.) is applied to cover the cultivation media of a sown plant or transplanted seedling so as to control the weed growth and prevent pest and soil borne disease.

## Description

The present invention is generally related to a plant cultivation method for preventing weed, disease and pest.

Typically, the production of crops needs the steps of land preparation, seeding, fertilizing, weeding, and reaping. Nonetheless, every step needs a great deal of manpower, wherein the hand weeding step consumes the most manpower. In order to implement the job of hand weeding, traditionally the farmer mostly uses black plastic film to cover on the soil to prevent the growth of weeds. However, after the crops are harvested, the black plastic film will become useless and the farmer generally does not know how to dispose of the plastic film. Consequently, the discarded plastic film often results in a secondary pollution. Another common way to implement the job of weed control is to use the herbicide. Unfortunately, the herbicide offered commercially usually causes the crops to have residual toxin and leads to environment pollution.

Owing to the naturally-resolvable character of paper products, after the purpose of producing crops is achieved, the paper products will automatically be returned to the nature and become an organic material in soil, thereby eliminating the drawbacks of recycling the discard and making environment pollution. Hence, to research and develop paper products to replace these weed-proof material is a foresighted object in the considerations of economical effect and environment protection.

Furthermore, in addition to the aforementioned problems, the plant cultivation nowadays is confronted with the hazards of disease and pest. Thus, how to develop a method for combining the functions of weed prevention and preventing disease and pest so as to save time and manpower is the main object of the present invention.

It is therefore tried by the applicant to develop a plant cultivation method for preventing weed, disease and pest.

An object of the present invention is to develop a plant cultivation method for preventing weed, disease and pest.

Another object of the present invention is to provide a material feasible for preventing weed, disease and pest in a plant cultivation process.

The present invention is a plant cultivation method for preventing weed, disease and pest, which is characterized in that a naturally-resolvable material daubed with a microorganism of a specific fungus is applied to be covered with a cultivation media of a sown plant or transplanted seedling so as to control the weed growth and prevent disease and pest.

In accordance with the present invention, the naturally-resolvable material is one selected from a group consisting of a paper mat, non-woven fabric, fiber, and naturally-resolvable polymer.

In accordance with the present invention, the paper mat can be folded on the two sides by 30 centimeters for reinforcing the resistance against the pressure resulting from the pressure of a paper nail or the cultivation media weighing down on it.

Preferably, the naturally-resolvable material has a thickness ranged from 0.2 to 0.3 mm.

In accordance with the present invention, the naturally-resolvable material can be paved on the cultivation media manually; and alternatively, by machine.

In accordance with the present invention, the naturally-resolvable material is photoresistive so as to prevent the growth of weeds.

In accordance with the present invention, the method is applicable to the crops cultivation process in a paddy field or an upland field.

In accordance with the present invention, the plant can be one selected from a group consisting of cereal, economic crops, green stuff, flower, forest and fruit.

In accordance with the present invention, the method further includes the steps of: suspending the spores of the microorganism in a carboxymethyl cellulose sodium salt (CMC) solution, daubing the naturally-resolvable material with the CMC solution, and drying the naturally-resolvable material.

In accordance with the present invention, the microorganism is an antagonistic, and more preferably, an isolate of Gliocladium.

In accordance with the present invention, the specific fungus is a fungus that induces rice sheath blight or radish seedling blight (Rhizoctonia solani, AG-4).

In accordance with the present invention, the naturally-resolvable material is further daubed with a slow release chemical fertilizer so as to reduce the cost of manual fertilization.

In accordance with another aspect of the present invention, a material feasible for preventing weed, disease and pest in a plant cultivation process is provided, which is characterized in that the material can be naturally resolved and be daubed with a microorganism of a specific fungus.

Now the foregoing and features of the present invention may best be understood through the following embodiments (taking the paper mat as the example of the naturally-resolvable material) accompanied with the experimental statistics.

### EMBODIMENT 1: A WEED PREVENTION EXPERIMENT IN A PADDY FIELD BY USING A PAPER MAT

After the paddy field is prepared, the square experimental area with the side length of 11m is partitioned into sixteen plots. Every plot has a side length of 1.5m, and be separated with each other by 1m to serve the spacing as a protection column. The protection column is processed with the following treatments: (1) Paving paper mat: Cutting the paper mat into a square of 1.5m×1.5m. Cutting the paper mat by razor blade to form cultivation holes. Adjusting the spacing of the rice seedling to be 25cm. Paving the paper mat evenly on the soil of the plots. Transplanting 25 hills of rice seedlings in the abovementioned cultivation holes (5 seedlings per hill). (2) Herbicide treatment: Transplanting 25 hills of rice seedlings to the abovementioned cultivation holes (5 seedlings per hill). Appling bensulfuronmethyl + pretilachlor 1.8 % G as the herbicide to the paddy field on five days after transplanting the rice seedlings (12 kilograms herbicide in every plot). All treatments have four replicates and with an unprocessed set as check. Observing the transition of the paper mat and the weed control condition during the growth of rice. Investigating the rice fresh weight and rice dry weight while reaping, and investigating the weed fresh weight in these plots.

The experimental result is shown in Table 1.

**Table 1.**

| Efficacy of weed control in a paddy field by using a paper mat | | | | |
|---|---|---|---|---|
| Treatment | Rice (Taikun 8) | | Weed fresh weight | Weed control rate (%)¹ |
| | Fresh weight (g) | Dry weight (g)² | | |
| Paper mat | 1970.00 a* | 1810.50 a | 3.30 a | 98.98 |
| Herbicide³ | 1968.75 a | 1748.00 a | 0.18 a | 99.94 |
| The check (without paper mat) | 1402.50 b | 1215.50 **b** | 323.25 **b** | 0.00 |

| | | | | |
|---|---|---|---|---|
| ¹ Weed control rate (%) is derived by comparing to the check set. | | | | |
| ² The area is 4m². | | | | |
| ³ The herbicide is bensulfuronmethyl + pretilachlor 1.8 % G. | | | | |
| * The statistics shown in the table are mean, and all treatments have four replicates. Numbers within the same column followed by same letter are not significantly different. According to Duncan's multiple range, p is 0.05. | | | | |

It can be seen from Table 1 that the rice fresh weight in herbicide treatment (1968.75) and paper mat treatment (1670.00) are not significantly different, but the rice fresh weight in the check is significantly lower (1402.50). The weed fresh weights of the herbicide treatment and paper mat treatment are respectively 0.18 g and 3.30 g, which are significantly lower than the weed fresh weight of the check. The weed control rates of the herbicide treatment and the paper mat treatment are respectively rated at 99.94% and 98.98 % comparing to that of the check.

As a result, paving a paper mat evenly on the soil of the paddy field and transplanting rice seedlings by separating each rice seedling with an appropriate spacing is capable of achieving the purpose of the weed prevention. The paving of the paper mat can be performed manually or by machine, but it is to be noted that the field water should be lessened as possible to render the junction of the soil and paper mat hermetic so as to prevent the formation of gaps and thus the paper mat will not be easily turned up or worn out. As using the paper mat, it should be noted that the surface of soil have to keep even in order to avoid forming a hollow beneath the paper mat or forming bubbles and ruin the paper mat. Because the paper mat has a better wetting and sunken property, the paper mat can resist the destruction resulting from the rain and bird. Using a paper mat in a paddy field can isolate the surface of the soil from being shined by the sunshine, thereby restraining the growth of germinating weed and achieve the purpose of weed prevention. The paper mat will be naturally resolved into small pieces as it is applied in the paddy field for approximately 60 days. In the meanwhile, the growth of the rice seedlings has reached the vigorous phase and the rice leaf has overlaid the surface of the soil to a certain degree, and the sunshine required for the growth of weed in the paddy field is mostly isolated. Therefore, almost all the weeds in the paddy field will not germinate such that it will not generate negative influence on the subsequent growth of the rice seedlings. That makes the paper mat to sustain the function of weed prevention, even if the paper mat is worn out. In this experiment, it is found that the weed control effect of using a paper mat is comparable with that of using the herbicide, and therefore that yield of rice is transparently increased. After the rice is reaped, the paper mat is completely resolved into tiny fibers to be mixed with the soil and no more paper pieces are suspending in the field. Moreover, the secondary pollution will not occur and the following agricultural activity will not be affected.

### EMBODIMENT 2: A WEED PREVENTION EXPERIMENT IN AN UPLAND FIELD BY USING A PAPER MAT

After the upland field is prepared, the experimental area is partitioned into 12 plots (the plot area is 80cm×80cm). Cutting the paper mat into a rectangle of 80cm×60cm, and forming cultivation hole on the paper mat by cutting the paper mat with a razor blade. The spacing between the rice seedlings is adjusted to 20 centimeters. Paving the paper mat on the plots evenly and transplanting jute (Corchorus capsularis) seedlings in the cultivation holes (12 seedlings per cultivation hole). All treatments have four replicates and with an unprocessed set as check. Observing the transition of the paper mat and the weed control condition during the growth of jute. Jute fresh weight and dry weight and the weed fresh weight were measured after harvested in these plots.

The experimental result is shown in Table 2.

**Table 2.**

| Efficacy of weed control in a jute (Corchorus capsularis) field by using a paper mat | | | | |
|---|---|---|---|---|
| Treatment | Corchorus capsularis | | Weed fresh weight (g) | Weed control rate (%)¹ |
| | Height (cm) | Fresh weight (g)² | | |
| Paper mat | 112.56 a* | 1155.00 a | 4.08 b | 99.997 |
| Check (without paper mat) | 94.73 b | 762.50 b | 1582.50 a | 0.00 |

| | | | | |
|---|---|---|---|---|
| ¹ The weed control rate is derived by comparing to the check set. | | | | |
| ² The area is 0.48m². | | | | |
| * The statistics shown in the table are mean, and all treatments have four replicates. Numbers within the same column followed by same letter are not significantly different. According to Duncan's Multiple Range, p=0.05. | | | | |

The seedling height (112.56 cm) and the fresh weight (1155.00) of the paper mat treatment are significantly different with those of the check. Moreover, the weed fresh weight of the paper mat (4.08g) is also significantly different with that of the check (1582.50g). The weed control rate of the paper mat is rated at 99.97% comparing to that of the check.

### EMBODIMENT 3: A WEED PREVENTION EXPERIMENT IN AN UPLAND FIELD BY USING A PAPER MAT

This experiment is analogous to the experiment of embodiment 2. The process of this experiment is described as follows: Paving a paper mat on the soil of the plots and planting bitter gourd seedlings with each other is spaced by 1.2 meter (3 seedlings per plot). All treatments have four replicates and with an unprocessed set as check. Observing the transition of the paper mat and the weed control condition during the growth of the bitter gourd. Investigating the yield of bitter gourd and the weed fresh weight in these plots.

The experimental result is shown in Table 3.

**Table 3.**

| Efficacy of weed control in a bitter gourd field by using a paper mat | | | |
|---|---|---|---|
| Treatment | Bitter gourd | Weed fresh weight (g) | Weed control rate (%)¹ |
| | Fresh weight (g)² | | |
| Paper mat (150g/m²) | 36.25 a* | 0.57bc | 93.96 |
| Paper mat (120g/m²) | 34.07 a | 0.43 c | 95.02 |
| Covering straw | 34.40 a | 1.29 b | 85.05 |
| Check (without paper mat) | 26.49 b | 8.63 a | 0.00 |

| | | | |
|---|---|---|---|
| ¹ The weed control rate is derived from comparing to the check set. | | | |
| ² 3 bitter gourds/3.6 square meter | | | |
| * The statistics shown in the table are mean, and all treatments have four replicates. Numbers within the same column followed by same letter are not significantly different. According to Duncan's Multiple Range, p=0.05. | | | |

### EMBODIMENT 4: A WEED PREVENTION EXPERIMENT IN AN UPLAND FIELD BY USING A PAPER MAT

This experiment is analogous to the experiment of embodiment 3. The process of this experiment is described as follows: Paving a paper mat on the soil of the plots and planting radish seedlings with each other is spaced by 70 cm (34 seedlings per plot). All treatments have four replicates and with an unprocessed set as check. Observing the transition of the paper mat and the weed control condition during the growth of the radish. Investigating the yield of radish and the weed fresh weight in these plots.

The experimental result is shown in Table 4.

**Table 4.**

| Efficacy of weed control in a radish field by using a paper mat | | | | | |
|---|---|---|---|---|---|
| Treatment | Radish * | | | Weed fresh weight | Weed control rate (%)¹ |
| | Emergence rate(%) | Survival rate stand³ | Fresh weight (g) ² | | |
| Paper mat | 100 a* | 100.0 a | 7813.3 a | 8.8 b | 99.20 |
| Herbicide ⁴ | 12.7 c | 36.3 a | 2520.0 c | 8.0 b | 99.27 |
| Check(without paper mat) | 66.7 b | 84.3 b | 5070.0 b | 1100.0 a | 0.00 |

| | | | | | |
|---|---|---|---|---|---|
| ¹ The weed control rate is derived from comparing to the check. | | | | | |
| ² 34 radishes/2.88 square meter. | | | | | |
| ³ The surviving rate stand is evaluated on the 14 days after planting. | | | | | |
| ⁴ the herbicide is Lasso 43% EC. | | | | | |
| * The statistics shown in the table are mean, and all treatments have four replicates. Numbers within the same column followed by same letter are not significantly different. According to Duncan's Multiple Range, p=0.05. | | | | | |

In case of adopting the paper mat for an upland field, the paper mat is paved evenly on the field ridge and the paper mat should cover beyond the two sides of the field ridge. The paper mat is fixed by soil weighing down on it. In general, two weeks later the fixing point of the paper mat will be worn out due to the tension resulting from fixing the paper mat. Therefore, in order to prevent the paper mat from turning up and thus lowering the weed control effect, the paper mat applying to the upland field can be folded on the two sides by 30 cm for reinforcing the resistance against the pressure resulting from pressure of soil weighing down on it. When paving the paper mat, the moisture of the soil should be reminded so that the junction of the paper mat and the soil can be more hermetic and the weed control rate can be better. When paving the paper mat by an agricultural machine, soil can be attached to the agricultural machine so that the soil can weight down the paper mat during paving and thus reduce the manpower cost. The paper mat will be naturally resolved into small pieces while it is applied in the upland field for 70 to 90 days. In the meanwhile, the growth of the crop has reached the vigorous phase and the leaves have overlaid the surface of the soil to a certain degree, and the sunshine required for growth of the weed in the field is mostly isolated. Therefore, almost all the weed in the field will not grow such that it will not generate negative influence on the subsequent growth of the crop. That makes the paper mat to sustain the function of weed prevention, even if the paper mat is worn out. In this experiment, it is found that the weed control efficacy of using a paper mat is comparable with that of using the herbicide, and therefore the yield of crop is significantly increased. After the crop is reaped, the paper mat is completely resolved into tiny fibers to be mixed with the soil and no more paper pieces are suspending in the field. Moreover, it will not affect the agricultural activity when the field is rearranged, and the secondary pollution will not occur.

According to another aspect of the present invention, the photoresistive and naturally-resolvable material of the present invention can be daubed with an antagonistic or a microorganism to control certain plant diseases, or can be daubed with a slow release chemical fertilizer so as to reduce the cost of manual fertilizer. The following is several embodiments of using paper mat incorporating the antagonistic for preventing certain diseases.

The first embodiment will illustrate how a paper mat daubed with spores of an isolate of Gliocladium can prevent the rice sheath blight. In the beginning, filling the petri dish with field soil and adding water in the petri dish till saturation. Planarizing the surface of the petri dish and placing sclerotia of rice sheath blight on the surface of the petri dish. Covering the petri dish with a paper mat daubed with a spores of Gliocladium. Taking out the blight sclerotia after two weeks and cleaning it by sterile water and placing it on the discrimination plate of tannic acid medium (TA plate). If a sclerotium remains alive, the blight filamentous mycelium will grow on the surface of blight sclerotium and the color of TA will become brown. Based on this experiment it is known that all the blight sclerotia will be inactive.

### EMBODIMENT 5: PREVENTION OF RICE SHEATH BLIGHT IN A PADDY FIELD BY USING A PAPER MAT DAUBED WITH SPORES OF GLIOCLADIUM

After the paddy field is prepared, the square experimental area with the side length of 1 m is partitioned into sixteen plots with the side length to be 1.5 meter. Protection columns with the side length of 1 meter are reserved between these plots for being processed with the following treatments: (1) paving a paper mat daubed with chlamydospores: Acquiring a chlamydospore suspension that has been grown for five days. After centrifuging the suspension by 10000g for 20 minutes, incorporating the sedimentary chlamydospores into 2% carboxymethyl cellulose sodium salt (CMC) solution. Chlamydospore concentration is adjusted to 10⁵ chlamydospores/ml. Uniformly daubing the cut paper mat with the CMC solution by a paint brush (100 ml/m² paper mat) and place it at room temperature and dry the paper mat to serve it as a spare. (2) paving a paper mat daubed with conidia: An isolate of Gliocladium that has been grown on a PDA plate for five days. The plate is washed with sterile water to produce conidia suspension. After centrifuging the suspension by 10000g for twenty minutes, incorporating the sedimentary conidia into 2% CMC solution. The conidia concentration is adjusted to 10⁵ conidia/ml. Uniformly daubing the cut paper mat with the CMC solution by a paint brush (100 ml/m² paper mat) and place it at room temperature and dry it to serve it as a spare. (3) fungicide treatment: On the 50 days after transplanting the seedlings, fungicide pencycuros 25% WP at rate 2000× is applied. All treatments have four replicates and with an plot without paper mat and fungicide treatment as check. The fungicide applying to the plots uses the bensulfuronmethyl + pretilachlor 1.8 % G as the herbicide for weeding control. Observing the transition of the paper mat and the occurrence of the rice sheath blight during the growth of rice (Taikun 8). Investigating the rice fresh and dry weight, and the number and size of the rice sheath blight lesion while reaping.

The experimental result is shown in Table 5. It can be clearly seen from Table 5 that the severity of rice sheath blight of the Gilocladium treatment and the fungicide treatment are lighter than that of the check plot. In regard to the relative lesion height, there does not have a significant difference between the paper mat daubed with Chlamydospores (6.4cm) and conidia (6.9cm) of Gliocladium, but there does have a significantly difference comparing to the fungicide treatment (12.8) and the check (13.2). The four treatments do not have a significant difference in the aspect of rice fresh weight (927.8, 906.5, 870.3, 858.8). The paper mat daubed with Gliocladium Chlamydospores and Conidia and fungicide treatment do not have a significant difference in the aspect of rice dry weight, but have a significant difference comparing to the check.

**Table 5**

| Treatment | Relative lesion height (%)² | Yield (Taikun 8) (g)¹ | |
|---|---|---|---|
| | | Fresh weight | Dry weight |
| Gilocladium sp. G-8 | 6.4 b * | 927.8 a | 786.0 a |
| Chlamydospores | 8.9 ab | 906.5 a | 758.3 ab |
| Conidia | | | |
| Fungicides³ | 12.8 a | 870.3 a | 738.5 ab |
| Check | 13.2 a | 858.8 a | 723.5 b |

| | | | |
|---|---|---|---|
| ¹ 2.25 m² area, with 25 hills . | | | |
| ² relative lesion height (%)=[highest point a lesion is observed (cm)/Plant height (cm)] × 100. | | | |
| ³ Pencycuron 25% WP. | | | |
| * The statistics shown in the table are mean. All treatments have four replicates. Numbers within the same column followed by same letter are not significantly different. According to Duncan's Multiple Range, p=0.05. | | | |

### EMBODIMENT 6: PREVENTION OF RADISH SEEDLING BLIGHT (RHIZOCTONIA SOLANI, AG-4) IN A FIELD BY USING A PAPER MAT DAUBED WITH GLIOCLADIUM

This embodiment is analogous to the embodiment 5. In the experiment of prevention of radish seedling blight (Rhizoctonia solani, AG-4) by using a paper mat daubed with chlamydospores of Gliocladium, the paper mat is inlayed with radish seedling and daubed with the chlamydospores of Gliocladium. Hereafter, the paper mat is covered with the surface of the prepared soil. It is found that the seed germination is more or less retarded. It is possibly due to the high concentration of the Gliocladium, but the ratio of suffering the radish seedling blight is approaching zero. It is evident that the radish seedling blight can be thoroughly prevented, whereas the ratio of suffering the radish seedling blight without being daubed with the chlamydospores of Gliocladium is 50-66%. It reveals that the paper mat daubed with chlamydospores of Gliocladium can effectively prevent the radish seedling blight. The experimental result is shown in Table 6.

**Table 6**

| Treatment | Numbers of propagules/g soil(R. solani AG-4) | Radish | | |
|---|---|---|---|---|
| | | Emergency rate (%) | | Damping off(%) |
| | | 3^{rd} day | 7^{th} day | 14^{th} day |
| Seeds inlayed in paper mat | 5.64±1.17 | 0.0 c * | 66.7 b | 0.0 d |
| daubed with | 2.05±0.89 | 0.0 c | 83.3 ab | 0.0 d |
| chlamydospores of | 0.00 | 0.0 c | 100.0 a | 0.0 d |
| Gliocladium | | | | |
| Seeds inlayed in paper mat | 5.64±1.17 | 66.7 b | 91.7 a | 66.7 ab |
| without daubed with | 2.05±0.89 | 91.7.0 a | 100.0 a | 50.0 bc |
| Gliocladium | 0.00 | 100.0 a | 100.0 a | 8.3 d |
| Seeds sown on soil | 5.64±1.17 | 75.0 b | 91.7 a | 75.0 a |
| without paper mat and | 2.05±0.89 | 91.7.0 a | 100.0 a | 41.7 c |
| Gliocladium | 0.00 | 100.0 a | 100.0 a | 41.7 c |

| | | | | |
|---|---|---|---|---|
| * The mean emergence rate and the survival rate of radish. All treatments have 3 replicates. Numbers within the same column followed by same letter are not significantly different. According to Duncan's Multiple Range, p=0.05. | | | | |

From the above experiments in a paddy field and/or an upland field, it proves that the paper mat is quite effective in weed prevention, and the weed control rate can be rated at 98%. The effect of using a paper mat is comparable with that of using a herbicide, and the paper mat will be naturally resolved after a period of time. Thus, the problems of recycle and making environment pollution is resolved, and thus the paper mat is worthwhile promoting in the application of weed prevention in the agricultural activity. Certainly, except for the paper mat, other materials such as non-woven fabric, fiber, and naturally-resolvable polymer can be applied as the naturally-resolvable material and result in the same effect. Also, the naturally-resolvable material can be daubed with an antagonistic microorganism such as Gliocladium for simultaneously implementing the functions of weed prevention and preventing the disease and pest, which is beneficial to the promotion of yield. Consequently, the manpower cost and the time expense are greatly reduced for improving the agricultural performance.

## Claims

1. A plant cultivation method of preventing disease and pest, **characterized by** providing a naturally-resolvable material and daubing said naturally-resolvable material with a microorganism or an antagonistic of a specific fungus, and covering said daubed naturally-resolvable material on a cultivation media of a sown plant or transplanted seedling.

2. The plant cultivation method as defined in claim 1 wherein said naturally-resolvable material is one selected from a group consisting of a paper mat a non-woven fabric, a fiber, and a naturally-resolvable polymer.

3. The plant cultivation method as defined in claim 2 wherein said paper mat can be folded on the two sides thereof by 30 centimeters for reinforcing the strength thereof upon being fixed to a paper nail being compressed by said cultivation media.

4. The plant cultivation method as defined in claim 1 wherein said naturally-resolvable material has a thickness ranged from 0.2 to 0.3 mm.

5. The plant cultivation method as defined in claim 1 wherein said naturally-resolvable material is paved on said cultivation media manually or by machine.

6. The plant cultivation method as defined in claim 1 wherein said naturally-resolvable material is photoresistive so as to prevent the growth of weeds.

7. The plant cultivation method as defined in claim 1 wherein said method is applicable to the crops cultivation process in a paddy field or in an upland field.

8. The plant cultivation method as defined in claim I wherein said plant can be one selected from a group consisting of cereal, economic crops, green stuff, flower, forest and fruit.

9. The plant cultivation method as defined in claim 1 further includes the steps of:
suspending the spores of said microorganism or said antagonistic in a carboxymethyl cellulose sodium salt (CMC) solution;
uniformly daubing said naturally-resolvable material with said solution; and
drying said naturally-resolvable material.

10. The plant cultivation method as defined in claim 1 wherein said microorganism or said antagonistic is a Gliocladium G-8.

11. The plant cultivation method as defined in claim 10 wherein said specific fungus is a fungus that induces a radish seedling blight (Rhizoctonia solani, AG-4) or a rice sheath blight (Rhizoctonia solani, AG1).

12. The plant cultivation method as defined in claim 1 wherein said naturally-resolvable material is further daubed with a slow release chemical fertilizer so as to reduce the cost of manual fertilization.

13. A material feasible for preventing, disease and pest in a plant cultivation process, **characterized in that** said material can be naturally resolved and be daubed with a microorganism or an antagonistic of a specific fungus.

14. The material as defined in claim 13 wherein said material is one selected from a group consisting of paper mat, non-woven fabric, fiber, and naturally-resolvable polymer, said material has a thickness ranged from 0.2 to 0.3 mm, said material is photoresistive so as to prevent the growth of weeds, said microorganism or said antagonistic is a Gliocladium G-8, said specific fungus is a fungus that induces a radish seedling blight (Rhizoctonia solani, AG-4) or a rice sheath blight (Rhizoctonia solani, AG1), and said naturally-resolvable material is further daubed with a slow release chemical fertilizer.
